# EUROPEAN PATENT APPLICATION

(11) **EP 1 927 813 A1**
(43) Date of publication of application: **04.06.2008**
(21) Application number: 06796975.8
(22) Date of filing: 29.08.2006
(51) Int. Cl.: F24F 13/28, B01D 46/10

(54) **INDOOR MACHINE OF AIR CONDITIONER**

(30) Priority: 30.08.2005 JP 2005249735
(71) Applicant: Toshiba Carrier Corporation, Tokyo 105-8001 (JP)
(72) Inventor: OZAWA, Tetsuro, c/o Toshiba Carrier Corp., Fuji-shi, Shizuoka-ken 416-8521 (JP); SUZUKI, Hideto, c/o Toshiba Carrier Corp., Fuji-shi, Shizuoka-ken 416-8521 (JP); SANO, Mitsukuni, c/o Toshiba Carrier Corp., Fuji-shi, Shizuoka-ken 416-8521 (JP); MISHIMA, Takechika, c/o Toshiba Carrier Corp., Fuji-shi, Shizuoka-ken 416-8521 (JP); OKADA, Kaku, c/o Toshiba Carrier Corp., Fuji-shi, Shizuoka-ken 416-8521 (JP); TAKEYA, Nobuyuki, c/o Toshiba Carrier Corp., Fuji-shi, Shizuoka-ken 416-8521 (JP); HIDA, Yoshiyuki, Annaka-shi, Gumma 379-0136 (JP); SHIBAYAMA, Yoshiyuki, Annaka-shi, Gumma 379-0136 (JP)
(74) Representative: Henkel, Feiler & Hänzel
(86) International application number: PCT/JP2006/316998
(87) International publication number: WO 2007/026706

(57) **Abstract**

An indoor unit of an air conditioner includes a front air inlet (4) and an upper air inlet (6), a front air filter (5A) and an upper air filter (5B) respectively arranged facing the front air inlet (4) and the upper air inlet (6), a front air inlet frame (7A) for holding and movably supporting the front air filter (5A) in the direction of the upper air inlet (6), an upper air inlet frame (7B) for holding and movably supporting the upper air filter (5B) in the direction of the front air inlet (4), a front movement mechanism (20A) for reciprocating the front air filter (5A), an upper movement mechanism (20B) for reciprocating the upper air filter (5B), and a cleaning unit (Z) having a rotary brush (25) for removing dust from the front air filter (5A) and the upper air filter (5B) and a dust collecting section (S) for collecting dust, and the front movement mechanism (20A) and the upper movement mechanism (20B) respectively moves the front air filter (5A) and the upper air filter (5B) alternately, with respect to the cleaning unit (Z).

## Description

### Technical Field

The present invention relates to an indoor unit of an air conditioner, and more particularly to an air filter cleaning mechanism in which an air filter is divided into a front air filter and an upper air filter, and dust captured and adhering to the filters is automatically removed.

### Background Art

In an indoor unit of an air conditioner, room air is taken in from an air inlet into the indoor unit body. Dust contained in the room air is captured by an air filter provided facing to the air inlet, so that only the room air is introduced into a heat exchanger to be heat exchanged. As the operation of air-conditioning goes on, captured dust is accumulated on the air filter. If the accumulated dust is remained untouched, it incurs degradation of heat exchange efficiency since the circulation of the room air with respect to the heat exchanger is inhibited.

Ideally, dust adhering to the air filter should be periodically removed to improve the heat exchange efficiency. For this purpose, a front panel which configures the front of the indoor unit body is turnably provided, and the air filter is exposed when the front panel is opened. The air filter can be easily dismounted by pulling the bottom end of the air filter. After removing the dust adhering to the air filter, the filter can be returned to its original position by applying and pressing up the upper end of the air filter onto the indoor unit body.

However, indoor units of air conditioners popularly used are mostly of the wall-mounted type, which is mounted high up on the wall of a room. Thus, for elderly people and women, for example, opening and closing a front panel and detaching and reattaching an air filter are laborious, and dust adhering to the air filter tends to remain untouched.

Consequently, as disclosed in Jpn.Pat.Appln.KOKAI Pulication No. 2002-5504, for example, an air conditioner in which dust adhering to an air filter is automatically removed has come to be provided. More specifically, the above air conditioner includes turning means for turning the air filter along the inside of an air inlet of the main body, dust removal means for removing dust adhering to the air filter, and a dust storage section for collecting removed dust.

According to the above art, a drive motor drives to rotate a roll axis, on which an upper end of the air filter is wound, for rolling up the air filter. At the same time, the dust adhering to the air filter is scraped off by rotating a bristle brush that is pressed on the air filter. When the removal of the dust is completed with most part of the air filter being rolled up, drive operation of the drive motor is stopped. At this timing, a spiral spring coupled to the bottom end of the air filter is activated to set the air filter back to original position by pulling the air filter.

Since the above dust removal means removes dust by moving the whole air filter, the movement length of the air filter is long and it takes time for the dust removal. Also, in order to suppress increase in size of the main body, the diameter of the rolled-up air filter has to be minimized as much as possible. An extremely-thin air filter is therefore used.

Furthermore, since the spiral spring is activated for stretching the air filter at once when the dust removal is completed, the air filter should be made of high-intensity material which is durable to repetitive pulling force. Selection of material for such an extremely-thin and high-intensity air filter involves difficulty, and as a matter of course, such material is expensive and therefore adversely affects the cost.

If the above air filter is used for long time, flexibility of the air filter is inevitably lowered and causes generation of partial creases. Dust tends to be left on those creased parts. When the air filter is rolled up on the roll axis, the dust left on the creased parts transferred and dispersed to the overlapped parts of the rolled-up air filter. If the air filter becomes particularly dirty, equal roll-up of the filter becomes hard and the dust removal cannot be effectively performed, and incurs reduction of reliability.

### Disclosure of Invention

It is an object of the present invention to provide an indoor unit of an air conditioner, in which an air filter is divided into a front air filter and an upper air filter and each of the air filters is individually reciprocated to remove dust adhering to the air filters, for decreasing the size of the air filters and shortening the movement length of the air filters to shorten the time required for dust removal, while simultaneously improving durability and reliability by performing secure dust removal without being affected by secular changes.

In order to achieve the above object, in an indoor unit of an air conditioner of the present invention: a front air filter and an upper air filter are respectively arranged facing a front air inlet and an upper air inlet; a front movement mechanism reciprocates the front air filter in a direction of the upper air inlet; an upper movement mechanism reciprocates the upper air filter in a direction of the front air inlet; an air filter cleaning mechanism, which includes dust removal means for removing dust adhering to the front and upper air filters and a dust collecting section for collecting dust removed by the dust removal means, is arranged between the front air inlet and the upper air inlet; and the front movement mechanism and the upper movement mechanism respectively moves the front air filter and the upper air filter alternately, with respect to the air filter cleaning mechanism.

### Brief Description of Drawings

FIG. 1 is a schematic sectional view showing an indoor unit of an air conditioner according to one embodiment of the present invention;
FIG. 2 is a side view showing a main part of an indoor unit having a cleaning unit according to a first embodiment of the present invention;
FIG. 3 is a schematic view showing a configuration of the cleaning unit according to the first embodiment of the present invention;
FIG. 4 is a figure for explaining a mechanism of the cleaning unit according to the first embodiment of the present invention;
FIG. 5 is a perspective view showing a main part of an indoor unit having a cleaning unit according to a second embodiment of the present invention;
FIG. 6 is a perspective view in which a part of a drive mechanism section according to the second embodiment of the present invention is disassembled;
FIG. 7 is a side view showing the drive mechanism section according to the second embodiment of the present invention; and
FIG. 8 is a figure for explaining a mechanism of the cleaning unit according to the second embodiment of the present invention.

### Best Mode for Carrying Out the Invention

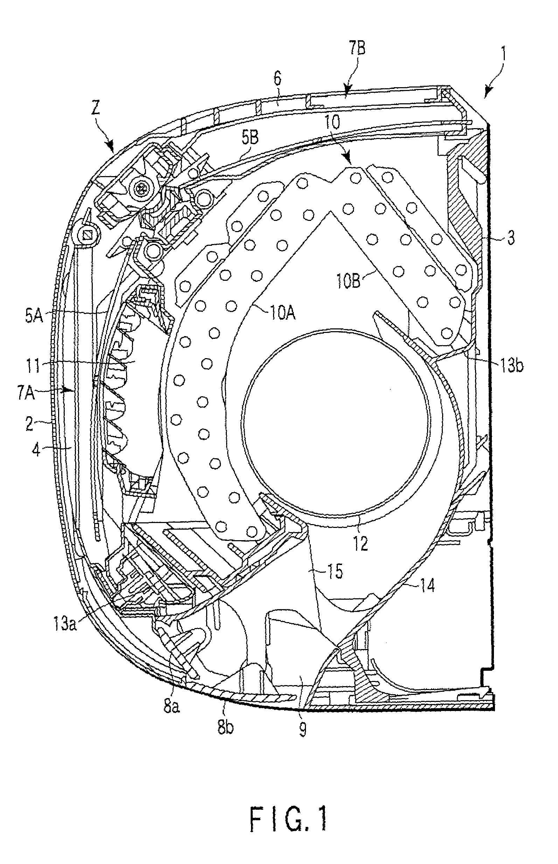

Now, one embodiment of the present invention will be described in detail with reference to accompanying drawings. FIG. 1 is a schematic sectional view of an indoor unit of an air conditioner with a front panel detached. (Components not signed in the description are not shown, ditto hereinafter.)

An indoor unit body 1 comprises a front panel 2 configuring a front side chassis and a back plate chassis 3 on which components are arranged, and is horizontally-long shaped. An opening serving as a front air inlet 4 is provided in a part of the front side of the indoor unit body 1, and a movable panel supported by an open/close drive mechanism is inset to the front panel 2 which faces the front air inlet 4.

When the air conditioner is not operated, the movable panel is controlled to be united to the front face of the front panel 2 to form one surface and shut the front air inlet 4 from a house room side. When the air conditioner is in operation, the movable panel is controlled to protrude toward front side for generating interspace therearound for letting the front air inlet 4 opened to communicate with the house room side.

An upper air inlet 6 is provided at the upper side of the indoor unit body 1. To the upper air inlet 6, a frame-shaped bar is set in for dividing upper side of the indoor unit into plurality of spaces. On the bottom of front surface of the indoor unit body 1, an air outlet 9 is formed. A couple of air outlet louvers 8a and 8b are provided in parallel for the air outlet 9. With each of the outlet louvers 8a and 8b, the air outlet 9 can be opened and shut, and air outlet direction can be set in accordance with operating conditions.

A heat exchanger 10, which is substantially V-shape and formed with a front side heat exchange section 10A and a back side heat exchange section 10B, is arranged inside the indoor unit body 1. The front side heat exchange section 10A is formed in such a manner that it is curved to be in parallel with a surface on which the front panel 2 is mounted and there is a space therebetween. The back side heat exchange section 10B is straightly formed to face the upper air inlet 6 in a slant manner.

Between the front air inlet 4 and the front side heat exchange section 10A, a front air filter 5A is attached, and between the upper air inlet 6 and the back side heat exchange section 10B, the upper air filter 5B is attached. In other words, the front air filter 5A is arranged to face the front air inlet 4 and the upper air filter 5B is arranged to face the upper air inlet 6.

The front air filter 5A is held by a front air inlet frame 7A, and the upper air filter 5B is held by an upper air inlet frame 7B. Along a space between the upper end of the front air inlet frame 7A and the anterior end of the upper air inlet frame 7B, an air filter cleaning mechanism Z (hereinafter referred to as "cleaning unit"), which is to be explained later, is located. More specifically, the cleaning unit Z is located between the front air inlet 4 and the upper air inlet 6.

An electric dust collector 11 is detachably mounted on a part of the front side of the front side heat exchange section 10A, which configures the heat exchanger 10. The electric dust collector 11 comprises a charging side electrode for applying electric charge to dust circulated in room air, and a dust collecting side electrode for attracting and capturing the charged dust.

An indoor air blower 12 is arranged between the front side heat exchange section 10A and the back side heat exchange section 10B of the above umbrella-like shaped heat exchanger 10. The indoor air blower 12 comprises a fan motor, which is arranged in a space at one end side of the indoor unit body 1, and a transverse fan, in which one spindle thereof is mechanically coupled to a rotary shaft of the fan motor. In another end side space of the indoor unit body 1, a ventilation unit, which is located next to the indoor air blower 12 and has its axial center on the extension of the axial center of the indoor air blower 12, is provided.

The ventilation unit is communicated with the cleaning unit Z via a connecting hose, and comprises a damper, a damper drive mechanism, and a blower mechanism. The damper drive mechanism rotationally drives on the basis of a control signal, and thereby switches between an operation in which secondary-side air of the heat exchanger being heat exchanged air that went through the heat exchanger 10 is guided into the blower mechanism, and an operation in which primary-side air of the heat exchanger that went through the front and upper air filters 5A and 5B and not yet going through the heat exchanger 10 is guided into the blower mechanism.

A fan casing configuring the blower mechanism has an air outlet body, and this air outlet body is communicated with outside of the room. Thus, when the fan inside the fan casing is rotationally driven, the secondary-side air of the heat exchanger or the primary-side air of the heat exchanger is discharged to outside of the room. That is to say, a ventilatory effect is performed by rotationally driving the fan. Selection of the primary side or secondary side is performed in accordance not only with condition of the room to be air-conditioned, but also with condition inside the indoor unit body 1.

Furthermore, the damper and the damper drive mechanism in the ventilation unit are able to block an air inlet provided in the fan casing of the blower mechanism. The air inlet is blocked in such a manner that, for example, the ventilation unit comes to communicate with inside the indoor unit body 1 via the air inlet of the casing and the outside, and this communication prevents dust and noise from coming into the room.

The connecting hose connects the cleaning unit Z and the ventilation unit in such a way that the connecting hose is located between the air inlet and the air outlet of the fan casing of the ventilation unit. Negative pressure is therefore applied on the cleaning unit Z via the connecting hose when the fan inside the fan casing is rotationally driven, even if the air inlet is blocked.

The bottom end of the front side heat exchange section 10A is on a front drain pan 13a, and the bottom end of the back side heat exchange section 10B is on a back drain pan 13b. The front and back drain pans 13a and 13b respectively receive drain water dropped from the front and back heat exchange sections 10A and 10B, and thereby discharge the drain water via an exhaust hose which is not shown.

One outside sidewall of the front drain pans 13a and one outside sidewall of the back drain pan 13b are provided at a position close to an indoor air blower 12. These parts configure a nose with respect to a transverse fan of the indoor air blower 12. A partition member 14 connects space between the sidewall parts of the front and back drain pans 13a and 13b, which configure the nose, and each side part of the air outlet 9. Space surrounded by the partition member 14 serves as an air outlet ventilation flue 15 which makes the nose communicated with the air outlet 9.

Next, the cleaning unit Z will be explained in detail.

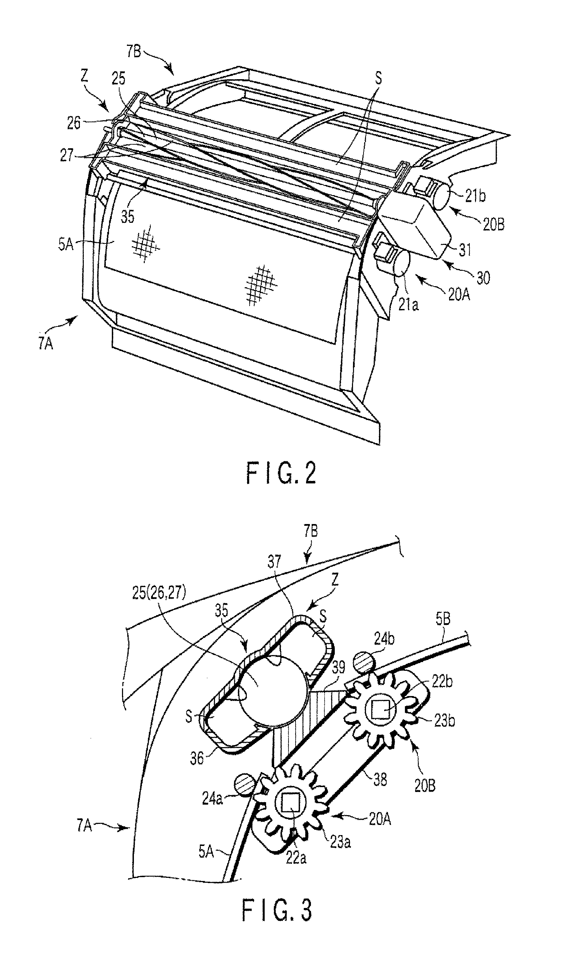

FIG. 2 is a perspective view showing the front air inlet frame 7A, upper air inlet frame 7B, and the cleaning unit Z. FIG. 3 is a schematic sectional view of the cleaning unit Z.

The front air filter 5A is configured in such a manner that it is reciprocated by a front movement mechanism 20A from a site facing the front air inlet 4 to a site facing the upper air inlet 6. Meanwhile, the upper air filter 5B is configured in such a manner that it is reciprocated by the upper movement mechanism 20B from a site facing the upper air inlet 6 to a site facing the front air inlet 4.

The above cleaning unit Z comprises a rotary brush 25 which serves as dust removal means for removing dust adhering to the front air filter 5A and the upper air filter 5B, a brush drive mechanism 30 for rotationally driving the rotary brush 25, a dust box 35 having dust collecting section S for collecting the dust removed by the rotary brush 25, and a seal member 39.

Although FIG. 2 shows a condition in which the front air filter 5A is build into the front air inlet frame 7A, the upper air filter 5A is omitted in the upper air inlet frame 7A and only the frame body is shown. On both side parts of the front air inlet frame 7A, guide rails are provided along a top-to-bottom direction, and both side ends of the front air filter 5A are engaged in these guide rails.

The front air inlet frame 7A movably supports the front air filter 5A along the top-to-bottom direction. Similarly, on the both side parts of the upper air inlet frame 7B, guide rails are provided along an anteroposterior direction, and the both side ends of the upper air filter 5B are engaged in these guide rails. In other words, the upper air inlet frame 7B movably supports the upper air filter 5B along the anteroposterior direction.

At a central part in the width direction of each of the air filters 5A and 5B, a center reinforcing bar is provided along the top-to-bottom (or anteroposterior) direction which is orthogonal to the width direction. So-called a rack, which is a spur gear configuring the front movement mechanism 20A and the upper movement mechanism 20B, is provided on back sides of each center reinforcing bar.

On a side surface of one side end of the front air inlet frame 7A (right side in FIG. 2), a drive motor for front section (stepping motor) 21a is installed. A rotary shaft of the drive motor for front section 21a projects into inside of the frame body, and the rotary shaft of the motor is coupled to a drive shaft 22a via a coupling. One end of the drive shaft 22a extends to substantially intermediate part in the width direction of the front air filter 5A, and the end of the drive shaft 22a is fit into a gear for filter 23a which meshes with the rack.

When the drive motor for front section 21a rotationally drives the gear for filter 23a, the front air filter 5A moves toward rotational direction of the gear for filter 23a since the gear 23a is meshed with the rack. A reinforcing bar 24a is provided close to the gear for filter 23a with a space therebetween, and this reinforcing bar 24a is built over both side ends of the front air inlet frame 7A. The reinforcing bar 24a reinforces the front air inlet frame 7A, while simultaneously supporting the front air filter 5A in such a way that the reinforcing bar 24a sandwiches the front air filter 5A with the gear for filter 23a and thereby smoothly guiding the front air filter 5A to the cleaning unit Z.

On a side surface of one side end of the upper air inlet frame 7B (right side in FIG. 2), a drive motor for upper section (stepping motor) 21b is installed. A rotary shaft of the drive motor for upper section 21b projects into inside of the frame body, and the rotary shaft of the motor is coupled to a drive shaft 22b via a coupling. One end of the drive shaft 22b extends to substantially intermediate part in the width direction of the front air filter 5B, and the end of the drive shaft 22b is fit into a gear for filter 23b which meshes with the above rack.

When the drive motor for front section 21b rotationally drives the gear for filter 23b, the front air filter 5B moves toward rotational direction of the gear for filter 23b since the gear 23b is meshed with the rack. A reinforcing bar 24b is provided close to the gear for filter 23b with a space therebetween, and this reinforcing bar 24b is built over both side ends of the front air inlet frame 7B. The reinforcing bar 24b reinforces the front air inlet frame 7B, while simultaneously supporting the front air filter 5B in such a way that the reinforcing bar 24b sandwiches the front air filter 5B with the gear for filter 23b and thereby smoothly guiding the front air filter 5B to the cleaning unit Z.

The rotary brush 25 configuring the cleaning unit Z is located in such a way that it faces each of the front and upper air inlet frames 7A and 7B in a longitudinal direction, and the rotary brush 25 has a shaft length substantially equal to entire lengths of the front and upper air inlet frames 7A and 7B. The rotary brush 25 includes a shaft section 26 whose both ends are pivot supported in a movable manner, and a plurality of brush sections 27 which are provided around a circumferential surface of the shaft section 26 with a predetermined space therebetween. Each of the brush sections 27 is provided in such a way that it is curved along the shaft direction of the shaft section 26 in a spiral manner.

One side end of the shaft section 26 laterally projects from side surfaces of the front and upper air inlet frames 7A and 7B, and is coupled to the brush drive mechanism 30. The brush drive mechanism 30 comprises a reduction gear group coupled to the shaft section 26 of the rotary brush 25 and a drive motor (compact DC motor) for driving the reduction gear group. These reduction gear group and the brush drive motor are accommodated in a box for brush drive mechanism, which is installed between the drive motor for front section 21a and the drive motor for upper section 21b.

The dust box 35 comprises a dust case 36, a dust cover 37, and a dust base 38. The dust case 36 and the dust cover 37 are assembled in such a way that the dust case 36 and the dust cover 37 surround the rotary brush 25 along a shaft direction and a part of the rotary brush 25 is exposed from an opening section formed with the dust case 36 and the dust cover 37. There are provided space sections on both sides of the rotary brush 25, and these space sections serve as the dust collecting section S for collecting dust removed by the rotary brush 25.

The dust base 38 faces the opening section from which the rotary brush 25 is exposed, and is arranged along a shaft direction of the rotary brush 25. The seal member 39 is provided on the dust base 38, and normally seals a part of the rotary brush 25 exposed from the dust case 36 and the dust cover 37 in an openable manner. An elastic member presses the seal member 39 up for sealing the opening formed in the dust case 36 and the dust cover 37. The dust collecting section S is therefore sealed with the seal member 39.

Since elastic force for pressing the seal member 39 up is extremely soft, the seal member 39 recedes for allowing the air filters 5A and 5B to pass through when the front air filter 5A or the upper air filter 5B is moved and bumped into the seal member 39, as described later. After each of the air filters 5A and 5B passed through, the seal member 39 is pressed up by a spring to reseal the opening formed in the dust case 36 and the dust cover 37.

In the indoor unit of the air conditioner according to the present invention is configured as described above, the movable panel opens the front air inlet 4 when an operation switch of a remote controller is switched ON, and the air outlet louvers 8a and 8b, which are provided in the air outlet 9, turn to set positions according to whether cooling operation or heating operation is assigned. At the same time, while the indoor air blower 12 performs air blowing operation, a compressor of an outdoor unit is driven to start freezing cycle operation.

Room air is introduced into the indoor unit body 1 from the front air inlet 4 and the upper air inlet 6, and when the room air passes through the front and upper filters 5A and 5B, dust contained therein is captured by the filters 5A and 5B. The room air, from which the dust contained therein is removed, circulates the heat exchanger 10 and heat exchange operation is performed with a cooling medium that is introduced to the heat exchanger 10. Then the heat-exchanged air is guided along the air outlet ventilation flue 15, and let out to the room from the air outlet 9 while being guided by the air outlet louvers 8a and 8b, for continuing efficient air-conditioning operation.

An "air filter cleaning mode" is automatically performed at the following timings: timing when a user selects the air filter cleaning mode by operating a remote controller; after air-conditioning operation at a predetermined interval; a preset time; and predetermined hours, etc.

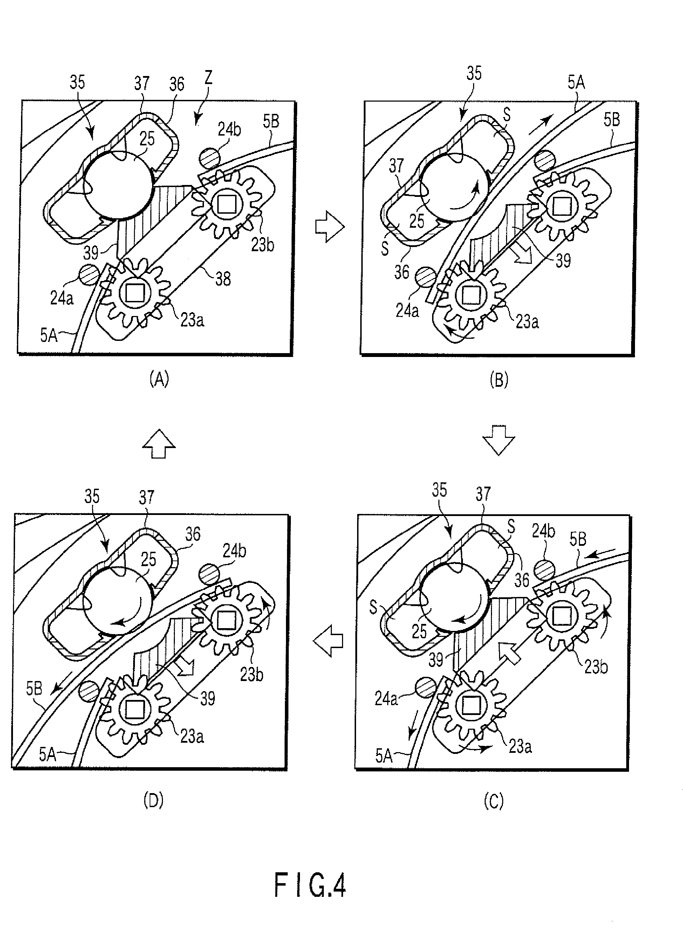

FIGS. 4(A) to 4(D) are drawings for sequentially explaining operations of the cleaning unit Z when the air filter cleaning mode is selected.

To describe schematically, either one of the air filters (in the case of FIGS. 4(A) to 4(D), the front air filter 5A) is firstly reciprocated with respect to the cleaning unit Z to remove dust deposited thereon. The other filter (the upper air filter 5B) is subsequently reciprocated with respect to the cleaning unit Z to remove dust deposited thereon. Even if the reciprocating order is reversed, cleaning can be performed without any problem.

FIG. 4(A) shows a positional relationship between the cleaning unit Z, the front air filter 5A, and the upper air filter 5A, at the times when air-conditioning is operated and stopped. Although, in this figure, the upper end of the front air filter 5A and the anterior end of the upper air filter 5B are in contact with the cleaning unit Z, the ends of the filters 5A and 5B may be apart from the cleaning unit Z. In other words, it is appropriate if the front air filter 5A is arranged to face the front air inlet 4 and the upper air filter 5B is arranged to face the upper air inlet 6, and the cleaning unit Z is located between the air filters 5A and 5B.

As shown in FIG. 4(B), in accordance with a selection of the air filter cleaning mode, a control section sends an operation signal to the drive motor of the brush drive mechanism 30 for rotationally driving the rotary brush 25 in a counterclockwise direction via the reduction gear group. At the same time, the control section sends an operation signal to the drive motor for front section 21 of the front movement mechanism 20A for rotationally driving the gear for filter 23a in a clockwise direction. The front air filter 5A including the rack meshed with the gear for filter 23a is moved upward which is a rotating direction of the gear.

An upper end edge of the front air filter 5A comes into contact with the seal member 39 for forcibly pushing the seal member 39 down. The front air filter 5A is therefore come to face the rotary brush 25 from the upper end edge thereof, and is moved up while sequentially coming into contact with the rotary brush 25 in a rubbing manner. Dust adhering to the front air filter 5A is smoothly and securely scraped off with the rotary brush 25.

More specifically, since the gear ratio of the reduction gear group in the brush drive mechanism 30 is set in such a manner that the rotational speed of the rotary brush 25 is set to be faster than the traveling speed of the front air filter 5A and that the front air filter 5A and the rotary brush 25 rotate (travel) in a same direction, no resistance is produced therebetween. The dust which is scraped off is sequentially led to and collected in the dust collecting section S configured with the dust case 36 and dust cover 37. Since the dust collecting section S is practically in hermetically-sealed condition, the scraped dust is never dispersed to the periphery.

The upper end edge of the front air filter 5A is interposed between the upper air filter 5B which is ready and waiting and the upper air inlet 6, and the front air filter 5A proceeds toward posterior end side of the upper air filter 5B. As shown in FIG. 4(B), the drive motor of the rotary brush 25 and the drive motor of the gear for filter 23a are stopped before the bottom end edge of the front air filter 5A reaches the gear for filter 23a. In other words, in the above state, all of the dust adhering to the front air filter 5A is removed and collected in the dust collecting section S.

Then, the control section sends a reverse rotational drive signal to the drive motor of the brush drive mechanism 30 and the drive motor 21a of the front movement mechanism 20A. The rotary brush 25 is rotationally driven in the clockwise direction and the gear for filter 23a is rotationally driven in the counterclockwise direction. The front air filter 5A is again in contact with the rotary brush 25 and moves downward to the original position facing the front air inlet 4. At this timing, the rotary brush 25 is to clean up the front air filter 5A again. Therefore, even if dust is left on the front air filter 5A, the rotary brush 25 removes the left-over dust completely.

As shown in FIG. 4(C), when the upper end edge of the front air filter 5A passes a location to be in contact with the rotary brush 25, the front air filter 5A completely returns to the original position facing the front air inlet 4. As the front air filter 5A passes through the contacting location, the seal member 39 moves up for resealing the opening section of the dust case 36 and the dust cover 37 and prevents dust from escaping from the opening section.

At the next timing, the control section sends a drive signal to the drive motor 21b of the upper movement mechanism 20B while continuing the drive of the rotary brush 25. As shown in FIG. 4(D), the gear for filter 23b is rotationally driven in the counterclockwise direction, and the anterior end edge of the upper air filter 5B pushes the seal member 39 down and thereby faces the rotary brush 25. The upper air filter 5B is then moved down while sequentially coming into contact with the rotary brush 25 in a rubbing manner. The dust adhering to the air filter 5B is smoothly and securely scraped off with the rotary brush 25.

More specifically, since gear ratio of the reduction gear group in the brush drive mechanism 30 is set in such a manner that the rotational speed of the rotary brush 25 is set to be faster than the traveling speed of the upper air filter 5B and that the upper air filter 5B and the rotary brush 25 rotate (travel) in a same direction, no resistance is produced therebetween. The dust which is scraped off is sequentially led to and collected in the dust collecting section S configured with the dust case 36 and dust cover 37. Since the dust collecting section S is in practically hermetically-sealed condition, the scraped dust is never dispersed to the periphery.

Then, the control section sends a reverse rotational drive signal to the drive motor of the brush drive mechanism 30 and the drive motor 21b of the upper movement mechanism 20B. The rotary brush 25 is rotationally driven in the counterclockwise direction and the gear for filter 23b is rotationally driven in the clockwise direction. The upper air filter 5B is again in contact with the rotary brush 25 and moves toward the original position facing the upper air inlet 6. At this timing, the rotary brush 25 is to clean up the upper air filter 5B again. Therefore, even if dust is left on the front air filter 5B, the rotary brush 25 removes the left-over dust completely.

When the anterior end edge of the upper air filter 5B passes a location to be in contact with the rotary brush and returns to the original position facing the upper air inlet 6, the control section sends stop signals to the brush drive mechanism 30 and the upper movement mechanism 20B at once for stopping rotations of the rotary brush 25 and the gear for filter 23b. Therefore, the seal member 39 moves up to reseal the opening section formed with the dust case 36 and the dust cover 37 as shown in FIG. 4(A).

The control section then sends a drive signal to the ventilation unit. The ventilation unit rotationally drives a fan of the blower mechanism after selecting a damper totally-enclosed mode. As a result, negative pressure is applied on the dust collecting section S formed in the cleaning unit Z, via the connecting hose. The dust collected in the dust collecting section S is all sucked up by the ventilation unit via the connecting hose, and eventually discharged to outside the room.

As explained above, in the indoor unit body 1 according to the present invention, the front air filter 5A and the upper air filter 5B respectively facing the front air inlet 4 and the upper air inlet 6 are separately configured. One air filter 5A is reciprocated with respect to the cleaning unit Z to remove dust adhering thereto, and then the other air filter 5B is reciprocated to remove dust adhering thereto.

Therefore, in the air conditioner of the present invention, travel distance of the front and upper air filters 5A and 5B for dust removal can be half, when compared with an air conditioner according to a prior art wherein a single air filter which faces both of a front air inlet 4 and an upper air inlet 6 is provided. Thus, dust removal time required in the air conditioner of the present invention can be reduced in half and improvement in workability can be thereby obtained. Since each of the air filters 5A and 5B moves to an arrangement position of the other filter, securement of a space at the destinations of the filters is not necessary.

Since each of the air filters 5A and 5B travels in such a manner that the filters 5A and 5B cross at the cleaning unit Z and do not protrude outside the indoor unit body 1, improvement in beauty can be also obtained. When compared with the air conditioner of the prior art wherein the air filter is rolled up for cleaning, the air filters and the mechanism of the cleaning unit can be simplified in the air conditioner of the present invention. Compared with a mechanism in which a dust removal means is moved for sucking dust up while the air filter is fixed as disclosed in the prior art, it is possible to downsize and simplify the air conditioner of the present invention, and durability and reliability can be thereby obtained.

According to the present invention, since dust adhering to both of the air filters 5A and 5B is removed with one rotary brush 25, the cleaning unit Z can be reduced in size and so can the arrangement space. Furthermore, since the dust collected in the cleaning unit Z is discharged outside the room by using the ventilation unit, there is no trouble of disposing dust. At this time, the opening section formed with the dust case 36 and the dust cover 37 is sealed with the seal member 39. Thus, there is no air leakage in the dust collecting section S and suction operation with respect to dust is therefore distinctly validated.

Furthermore, according to the present invention, independent drive sources are provided for each of the brush drive mechanism 30 for rotationally driving the rotary brush 25, the front movement mechanism 20A for moving the front air filter 5A, and the upper movement mechanism 20B for moving the upper air filter 5B. Thus, rotational speed and traveling speed, and rotational direction and moving direction in each of the mechanisms 30, 20A, and 20B are able to be independently operation controlled, and detailed operation control is therefore possible.

Next, a second embodiment according to the present invention will be described.

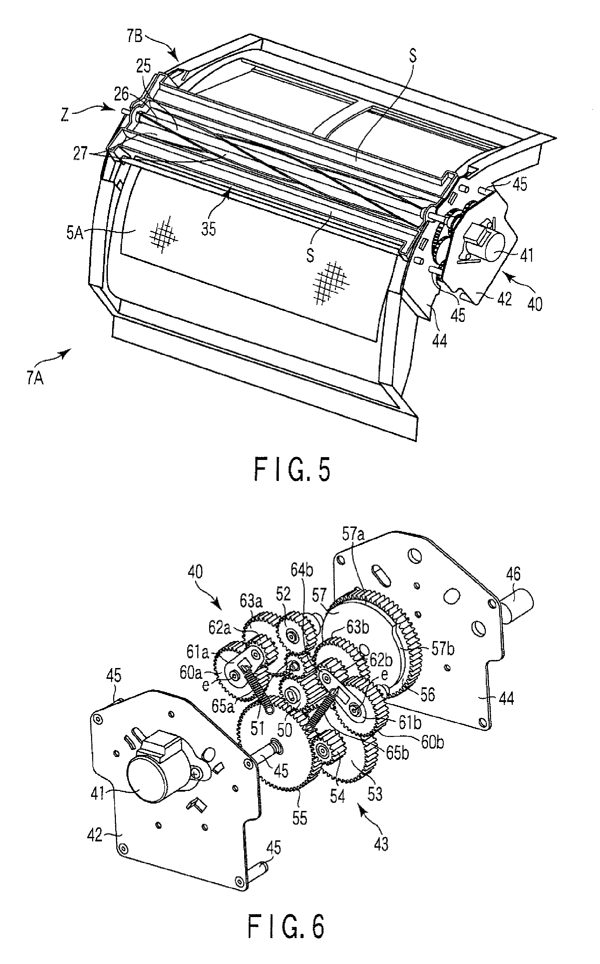

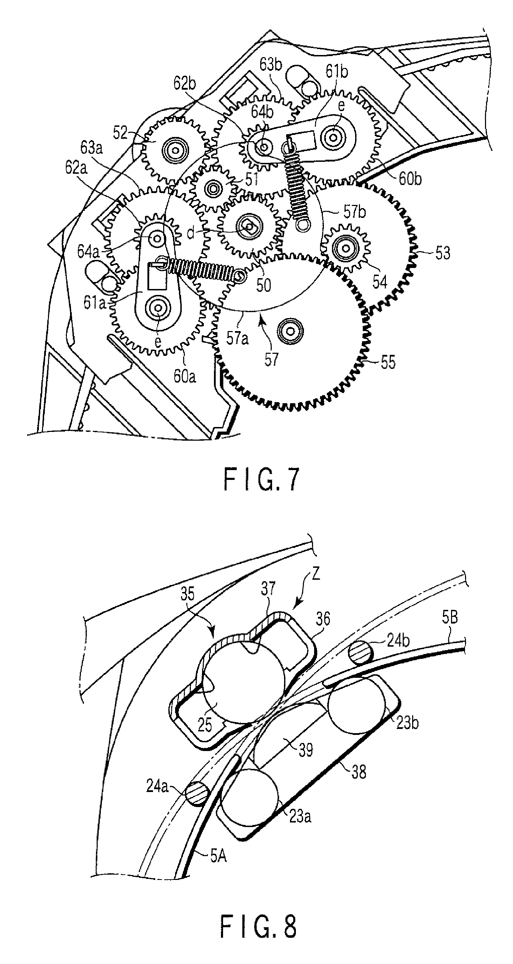

FIG. 5 is a perspective view showing the front air inlet frame and the upper air inlet frame 7B, and the cleaning unit Z. FIG. 6 a perspective view in which a drive mechanism section 40 is disassembled. FIG. 7 is a side view showing the drive mechanism section 40, and FIG. 8 is a figure for explaining a mechanism of the cleaning unit Z.

Incidentally, mechanisms of front and upper air filters 5A and 5B themselves, mechanism for supporting the front and upper air filter respectively with front and upper air inlet frames 7A and 7B, and movement mechanism with respect to the front and upper air filter 5A and 5B are similar to those of the first embodiment described above. Configuration of a rotary brush 25 of the cleaning unit Z, a dust box 35, and a seal member 39 are also similar to the configuration of the above described first embodiment.

To schematically explain about the second embodiment, it is characterized in that all of the drive mechanisms, namely a brush drive mechanism 30 for rotationally driving the rotary brush 25, a front movement mechanism 20A for reciprocating the front air filter 5A, and an upper movement mechanism 20B for reciprocating the upper air filter 5B share a common drive source in the drive mechanism section 40, which is to be described later.

More specifically, in the drive mechanism section 40, a motor mounting substrate 44 on which a drive motor 41 serving as a common drive source is mounted, and a gear mechanism mounting substrate 42 on which a gear mechanism 43, which is to be described later, is mounted are integrally coupled and fixed with each other via a plurality of supporting legs 45. These substrates 42 and 44 are mounted on a side surface of the front and upper air inlet frames 7A and 7B via a mounting leg 46 that is provided on the gear mechanism mounting substrate 44.

A rotary shaft d of the drive motor 41 protrudes through to a back side of the motor mounting substrate 42, and fits into an input gear 50 in a fixed manner. A junction gear 51 meshes with the input gear 50 and a spindle of the junction gear 51 is mounted on the gear mechanism mounting substrate 44. A gear section of the junction gear 51 is shaped to be long in a shaft direction, and the input gear 50 meshes with one lateral part of the gear section. To the rest of the other lateral part of the gear section, a gear to be described later is meshed and thereby configuring the gear mechanism 43.

A brush drive gear 52 is always meshed with one lateral part of the junction gear 51, and is also coupled to a shaft section 26 of the rotary brush 25 via the gear mechanism mounting substrate 44. Therefore, when the drive motor 41 rotationally drives the input gear 50, the rotary brush 25 rotationally drives together with the drive gear 52 in the same direction, via the junction gear 51.

Furthermore, a first reduction gear 53 having a large diameter is meshed with the input gear 50, and a spindle of the first reduction gear 53 is mounted on the gear mechanism mounting substrate 44. To the first reduction gear 53, a first driven gear 54 having a small diameter is coupled, and the first driven gear 54 rotates integrally with the first reduction gear 53. To the first driven gear 54, a second reduction gear 55 is meshed, and a spindle of the reduction gear 55 is mounted on the gear mechanism mounting substrate 44. To the second reduction gear 55, a second driven gear having a small diameter is coupled, and the second driven gear rotates integrally with the second reduction gear 55.

To the second driven gear, an operation changeover gear 56 having a large diameter is meshed. A spindle f the operation changeover gear 56 is also mounted on the gear mechanism mounting substrate 44. Therefore, when the drive motor 41 and the input gear 50 are rotationally driven, the first reduction gear 53 and the first driven gear 54 integrally rotate in a direction reverse to the rotational direction of the input gear 50, the second reduction gear 55 and the second driven gear integrally rotate in a direction same to the rotational direction of the input gear 50, and the operation changeover gear 56 rotates in a direction reverse to the rotational direction of the input gear 50.

On a side surface section of the operation changeover gear 56, a changeover cam 57 is provided. The changeover cam 57 is concentric with the operation changeover gear 56, and comprises a large diameter section 57a having a radius slightly smaller than a radius of a gear pitch, and a small diameter section 57b which is concentric with the large diameter section 57a and having a radius smaller than the radius of the large diameter section 57a. The large diameter section 57a takes up substantially 3/4 of a circumference of the changeover cam 57, and the small diameter section takes up the rest of substantially 1/4 of the circumference thereof.

On the other hand, a rotary shaft e of the gear for filter 23a which meshes with a rack of the front air filter 5A protrudes through the gear mechanism mounting substrate 44 to a drive mechanism 40 side. On an end of the rotary shaft e, a drive gear for front section 60a is provided, and also one end of an arm for front section 61a is movably engaged thereto.

A coupled small gear 62a and a coupled gear 63a, which are integrally coupled, are rotatably supported by the other end of the arm for front section 61a. A spindle of the coupled gear 63a protrudes from a side surface thereof, and a guide pin 64a is engaged to the protruding part.

Size of the arm for front section 61a is configured to have the drive gear for front section 60a and the coupled small gear 62a always in meshed condition. Since the coupled small gear 62a and the coupled gear 63a are integrally coupled, when the coupled small gear 62a rotates so does the coupled gear 63a.

To a coupled small gear 62 side end of the arm for front section 61a, one end of a spring 65a serving as a pull spring is latched on. The other end of the spring 65a is latched onto a latch part provided on a back side of the motor mounting substrate 44, and the spring 65a pulls and urges the end of the arm for front section 61a in a direction of the operation changeover gear 56. The guide pin 64a protruding from the arm for front section 61a is therefore always in contact with respective cam surfaces of the large diameter section 57a and the small diameter section 57b of the changeover cam 57.

In a condition where the guide pin 64a is in contact with the small diameter section 57b of the operation changeover cam 57, the coupled gear 63a meshes with the junction gear 51. Incidentally, since the input gear 50 and the drive gear 52 are always meshed with one side part of the junction gear 51, the coupled gear 63a meshes with the other side part of the junction gear 51. When the guide pin 64a comes into contact with the large diameter section 57a of the changeover cam 57, an end of the arm for front section 61a is pulled and urged in a rotational manner in a direction apart from the junction gear 51, and a mesh relationship between the coupled gear 63a and the junction gear 51 is thereby stopped.

The relationship between the operation changeover gear 56 and the coupled gear 63a for moving the front air filter 5A as described above is exactly equal to a relationship between the operation changeover gear 56 and a coupled gear 63b for moving the upper air filter 5B. Therefore, sign "b" is to be appended to equal components, in place of sign "a", and a new explanation will be omitted.

For convenience of explaining mechanism of the cleaning unit Z according to the second embodiment of the present invention, after reciprocating the upper air filter 5B to remove dust deposited thereon, the front air filter is then reciprocated to remove dust deposited thereon. Needless to say, there lies no problem even if cleaning order of the air filters 5A and 5B is reversed.

More specifically, when an "air filter cleaning mode" signal is input to a control section, the control section sends a drive signal to the drive motor 41 of the drive mechanism section 40. The input gear 50 which fits into the rotary shaft of the drive motor 41 is rotationally driven in a clockwise direction, and the rotary brush 25 is rotationally driven in the clockwise direction. At the same time, the operation changeover gear 56 is rotationally driven together with the changeover cam 57 in a counterclockwise direction, via the first reduction gear 53 which meshes with the input gear 50, etc.

As shown in FIG. 7, for example, in a case where a guide pin 64b protruding from a coupled gear 63b is rotationally in contact with one end of a small diameter section 56b of the operation changeover cam 57 at an input timing of an "air filter cleaning mode" signal, a coupled gear 63b and the junction gear 51 are in a meshed condition. Furthermore, since the operation changeover gear 56 is rotationally driven in the counterclockwise direction, the changeover cam 57 rotates in a condition where the guide pin 64b is rotationally in contact with the small diameter section 57b. A drive gear for upper section 60b is rotationally driven via a coupled small gear 62b which is integral with the coupled gear 63b, and a gear for filter 23b thereby moves the upper air filter 5B in an anterior direction.

The moving direction of the upper air filter 5B and the rotational direction of the rotary brush 5 are the same, and gear ratio in the drive mechanism 40 is set in such a manner that the rotational speed of the rotary brush 25 is set to be faster than the traveling speed of the upper air filter 5B. Dust adhering to the upper air filter 5B is therefore smoothly and securely removed.

The cleaning unit Z is designed to have a posterior end edge of the upper air filter 5B passes through the rotary brush 25, when the guide pin 64b faces the other side of the small diameter section 57b of the changeover cam 57 in response to a rotation of the operation changeover gear 56. At that timing, the controller section stops the drive motor 41, and then sends a reverse rotational drive signal to the drive motor 41. The Gears such as the input gear 50 are rotationally driven in a reverse direction and the guide pin 64b subsequently maintains a condition wherein the guide pin 64b is in rotationally in contact with the small diameter section 57b of the changeover cam 57. Therefore, the meshing relationship between the coupled gear 63b and the junction gear 51 remains and the upper air filter 5B thereby moves to a reverse direction which is upward.

When the small diameter section 57b of the changeover cam 57 reaches the guide pin 64b again, the upper air filter 5B completely returns to the original position facing the upper air inlet 6. Since the control section successively sends drive signals to the drive motor 41, the rotary brush 25 continues to rotate. However, neither of the air filters 5A and 5B is in contact with the rotary brush 25 at this timing, and the rotary brush 25 therefore runs idle.

The operation changeover gear 56 rotates for shifting a position, at which the guide pin 64b rotationally in contact with the changeover cam 57, from the small diameter section 57b to the large diameter section 57b. Therefore, the arm for upper section 61b supporting the guide pin 64b is rotationally urged, while resisting to elastic force of a spring 65b, to bring the coupled gear 63b apart from the junction gear 51, thereby dissolving the meshing relationship therebetween. In other words, a rotational drive force with respect to the drive gear for upper section 60b disappears to stop the rotation of the gear for filter 23b, and the upper air filter 5B is held at the original position.

Incidentally, drive signals are continuously input to the drive motor 41 for continuing rotation of the gears such as the input gear 50 and the operation changeover gear 56. At length, the small diameter section 57b of the changeover cam 57 comes in to rotationally contact the guide pin 64a, which protrudes from the coupled gear 63a. Therefore, the arm for front section 61a supporting the guide pin 64a is rotationally urged by elastic force of the spring 65a to have the coupled gear 63a meshed with the junction gear 51, which continues to rotate.

The coupled gear 63a is rotationally driven by the junction gear 51, and the gear for filter 23a is rotationally driven together with the drive gear for front section 60a. Accordingly, the front air filter 5A moves upward and comes into contact with the rotary brush 25. After this operation, the front air filter 5A is reciprocated once in upward and downward directions to remove dust adhering thereto, as exactly equal to the case of removing dust adhering to the upper air filter 5B as described above. Similarly, dust collected in the dust collecting section S is discharged to outside the room by operating the ventilation unit, when the dust removal with respect to both of the air filters 5A and 5B is completed.

As described above, in the indoor unit of the air conditioner according to the second embodiment of the present invention, one drive source (the drive motor 41) is used in common for driving the rotary brush 25, front movement mechanism 20A for the front air filter 5A, and the upper movement mechanism 20B for the upper air filter 5B. Thus, the configuration of the indoor unit according to the second embodiment has less impact on cost and contributes to reduction of running cost, because parts cost required for the configuration can be reduced compared with the configuration according to the first embodiment in which individual drive sources are provided.

However, since the drive mechanism section 40 according to the second embodiment has to be provided with the gear mechanism 43, in which a plurality of gears are combined, troublesome assembling is inevitable compared with the case of the first embodiment. At the same time, mechanical configuration of the drive mechanism section 40 according to the second embodiment renders electric control unnecessary, so that it is advantageous in simplifying the control.

Furthermore, the present invention is not limited to the above-described embodiments as are, and structural elements can be modified and materialized within a range which does not deviate from the gist of the present invention at the practical phase. Further, various inventions can be formed by appropriately combining the plurality of structural requirements disclosed in the above-described embodiments.

### Industrial Applicability

According to the indoor unit of an air conditioner of the present invention, it is possible to obtain size reduction of the air filters, and shortening of the time required for dust removal by shortening the movement length of the air filters. At the same time, it is also possible to improve durability and reliability by performing secure dust removal without being affected by secular changes.

## Claims

1. An indoor unit of an air conditioner comprising:
a front air inlet and an upper air inlet, and a front air filter and an upper air filter respectively arranged facing the front air inlet and the upper air inlet;
a front movement mechanism for reciprocating the front air filter in a direction of the upper air inlet;
an upper movement mechanism for reciprocating the upper air filter in a direction of the front air inlet; and
an air filter cleaning mechanism being arranged between the front air inlet and the upper air inlet, and having dust removal means for removing dust adhering to the front and upper air filters by movement of the front and upper filters, and a dust collecting section for collecting dust removed by the dust removal means,
**characterized in that** the front movement mechanism and the upper movement mechanism respectively moves the front air filter and the upper air filter alternately, with respect to the air filter cleaning mechanism.

2. The indoor unit of the air conditioner according to claim 1, **characterized in that** the front movement mechanism, the upper movement mechanism, and the air filter cleaning mechanism are respectively provided with independent drive sources.

3. The indoor unit of the air conditioner according to claim 1, **characterized in that** the front movement mechanism, the upper movement mechanism, and the air filter cleaning mechanism are provided with a drive source and a gear mechanism coupled to the drive source, that are used in common with each other.

4. The indoor unit of the air conditioner according to one of the claims 2 and 3, **characterized in that**
the air filter cleaning mechanism comprises:
a rotary brush serving as dust removal means, which is coupled to the drive source and is rotationally driven in a direction the same as a movement direction of the air filters and is driven at a speed greater than a traveling speed of the air filters, for removing dust adhering to the air filters; and
a dust box having dust collecting means for collecting dust in such a manner that the dust box contains the rotary brush and has an opening at a place where the rotary brush contacts the front air filter and the upper air filter, and collects dust within a space provided between the dust box and the rotary brush.
